# EUROPÄISCHE PATENTSCHRIFT

(11) **EP 0 434 951 B1**
(45) Veröffentlichungstag und Bekanntmachung des Hinweises auf die Patenterteilung: **04.01.1995**
(21) Anmeldenummer: 90121573.1
(22) Anmeldetag: 12.11.1990
(51) Int. Cl.: H02G 3/04, H01R 25/16

(54) **Kabelkanal**
Cable duct
Canalisation de câbles

(30) Priorität: 28.12.1989 DE 8915226 U
(43) Veröffentlichungstag der Anmeldung: 03.07.1991
(73) Patentinhaber: REHAU AG + Co, 95111 Rehau (DE)
(72) Erfinder:

(56) Entgegenhaltungen:
- DE-A- 3 643 559
- DE-U- 7 611 901

## Beschreibung

Die Erfindung betrifft einen Kabelkanal mit einem U-förmigen Unterteil und einem mit den freien Enden der U-Schenkel verbindbaren Deckel, wobei die freien Enden der U-Schenkel rechtwinkelig zum Kanalinneren hin abgewinkelt sind und in den abgewinkelten Bereichen Öffnungen zur Halterung sowohl des Deckels als auch von elektrischen Einbauteilen aufweisen, wobei der Deckel nach oben durch eine Blende abgedeckt ist und wobei der Deckel als wannenartiges Trageteil ausgebildet ist, das mit einem vormontierten elektrischen Einbauteil versehen ist.

Kabelkanäle dieser Art sind hinreichend bekannt. Die elektrischen Einbauteile, z. B. spezielle Geräte-Einbaudosen, werden in der Regel über Befestigungsschrauben mit Gleitmuttern am Boden des Kabelkanals festgelegt. Hierzu werden die Gleitmuttern in Haltenuten am Boden des Kabelkanals eingeschoben und mittels Festziehens der Befestigungsschraube an den Vorsprüngen der Aufnahmenuten festgelegt. Als nachteilig wurde bei dieser Einbausituation festgestellt, daß das Einbauteil direkt am Boden des Kabelkanals angeordnet ist und somit durch die gesamte lichte Höhe des Kanals greift. Eine zusätzliche Belegung des Kanals mit Kabel und dergleichen im direkten Auflagebereich des Einbauteils wird damit erschwert, wenn nicht gar verhindert.

Weitere Nachteile sind darin zu sehen, daß unterschiedliche Höhen der Kabelkanäle durch Distanzstücke überbrückt werden müssen, um die Einbauteile am Kabelkanal-Boden festzulegen. Dadurch ergibt sich zusätzlicher Arbeitsaufwand.

Aus dem DE-U 76 11 901 ist der Vorschlag bekannt, das elektrische Einbauteil nicht am Boden des Kabelkanals, sondern an der Innenseite des Deckels zu befestigen. Auf diese Weise wird der lichte Querschnitt des Kabelkanals, der sich zwischen dessen Boden und der Unterseite des Einbauteils befindet, für eine zusätzliche Belegung mit Kabeln und dergleichen freigehalten.

Der Nachteil dieser vorbekannten Einbausituation wird jedoch in dem aufwendigen Montagevorgang gesehen. Für die Montage sind zunächst in jedem Einbauteil wenigstens zwei Einführungsöffnungen für Haltestücke zu schaffen, die in diese Öffnungen eingeführt werden müssen. Nach der Einführung der Haltestücke in die betreffenden Öffnungen müssen die ersteren derart in den Öffnungen verdreht werden, daß ihre außermittig angeordneten Befestigungsbohrungen mit den im Deckelteil angeordneten Aufnahmebohrungen fluchten. Durch diese Aufnahmebohrungen werden Senkkopfschrauben geführt, welche in die Befestigungsbohrungen der Haltestücke eingedreht werden und das Einbauteil am Deckel verspannen. Zu diesem aufwendigen Montagevorgang kommt als weiterer Nachteil, daß die Zugriffsöffnung für das Einbauteil so aus dem Deckel herausgestanzt werden muß, daß Haltelappen der vorderen Deckelwand stehenbleiben müssen, in welche die Aufnahmebohrungen eingebracht sind und die damit zwangsläufig in die lichte Öffnung Deckels hineinragen. Damit wird die Zugriffsmöglichkeit über die volle Deckelöffnung zum Einbauteil beeinträchtigt.

Aus der DE 36 43 559 A 1 ist eine in einem Brüstungskanal befestigbare Einbaudose bekannt, welche als vormontiertes elektrisches Einbauteil in einem wannenartigen Trageteil angeordnet ist. Das wannenartige Trageteil ist über federartige Rastelemente an den freien Schenkeln des U-förmigen Brüstungskanals rastend festgelegt, wobei der Deckelrand und das Trageteil fluchtend angeordnet und mit einer Blende abgedeckt sind. Die Nachteile dieser Anordnung liegen in der umständlichen Herstellung der Rastverbindung zwischen den federartigen Rastelementen des Trägerteils und den freien Schenkeln des Brüstungskanals.

Gegenüber diesem Stand der Technik hat sich die Erfindung die Aufgabe gestellt, neben einer optimalen Montage des Einbauteils insbesondere eine Schnellverrasterung des Trageteils mit dem Kabelkanal anzugeben. Erfindungsgemäß wird dazu vorgeschlagen, daß das wannenartige Trageteil die Deckelränder übergreift und daß an den seitlichen Begrenzungen des Trageteils randnahe Abstufungen ausgeformt sind, welche an den freien Längsrändern in Abwinkelungen auslaufen, die ihrerseits Rastnuten an den freien Enden der Schenkel des Kabelkanals überdecken.

Der Vorteil dieser Anordnung wird darin gesehen, daß die Montageeinheit auf der Baustelle derart auf den Kabelkanal aufgesetzt wird, daß die Deckelränder übergriffen werden. Dabei wird das wannenartige Trageteil vorteilhaft mit seinen seitlichen Rändern an den Rasteinrichtungen der freien Enden der U-Schenkel des Unterteils des Kabelkanals rastend festgelegt.

Um eine seitliche Verschiebung der vormontierten Einheit in ihrem Sitz auf bzw. im Kabelkanal zu vermeiden, ist es zweckmäßig, daß das wannenartige Trageteil zusätzlich mit Halteelementen an den flanschartigen Fahnen im Bereich der freien Enden der U-Schenkel des Unterteils des Kabelkanals festgelegt ist. Bei diesen Halteelementen kann es sich um Schnellverschluß-Halteelemente handeln.

In der Zeichnung ist ein Ausführungsbeispiel des neuerungsgemäßen Kabelkanals schematisch dargestellt; es zeigen:
Fig. 1 eine Draufsicht auf den Kabelkanal mit eingebautem Einbauteil im Teilschnitt;
Fig. 2 einen Querschnitt längs der Linie A-A der Fig. 1.

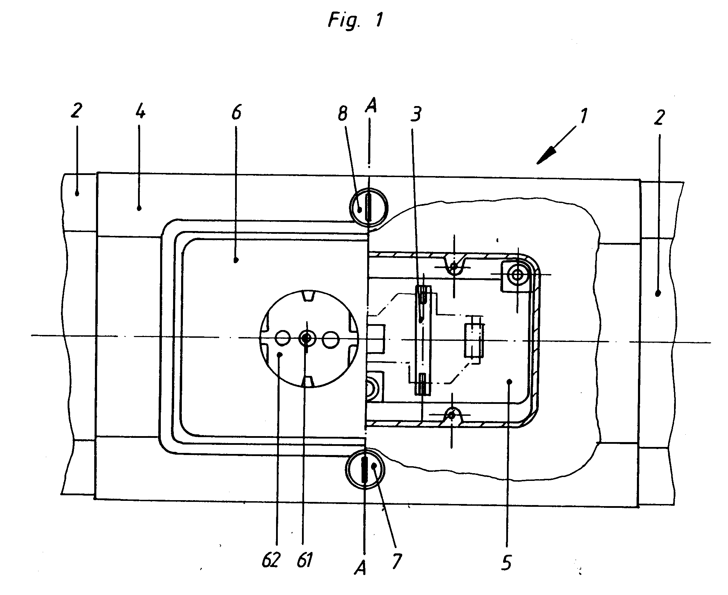

Fig. 1 zeigt den Kabelkanal 1, verschlossen mit dem Deckel 2. Im Bereich des elektrischen Einbauteils 3 - im vorliegenden Fall ein Steckdoseneinsatz mit zwei Schutzkontakt-Steckdosen - ist das wannenartige Trageteil 4 derart auf den Kabelkanal 1 aufgesetzt, daß die Deckelränder 2 vollkommen übergriffen sind. Das Einbauteil 3 ist durch den Teilschnitt durch das wannenartige Trageteil 4 sichtbar.

Das elektrische Einbauteil 3 ist auf einer Grundplatte 5 vormontiert und nach oben durch die Blende 6 abgedeckt. Die Blende 6 ist durch zwei Befestigungsschrauben 61 an den Steckdoseneinsätzen befestigt.

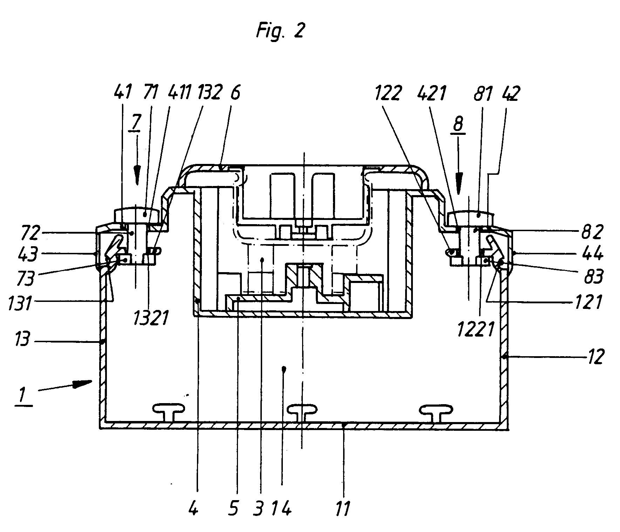

Um eine seitliche Verschiebung des wannenartigen Trageteils 4 zu verhindern, sind zwei Schnellbefestigungselemente 7, 8 , vorgesehen, deren Einsatz in Fig. 2 näher erläutert ist.

Fig. 2 zeigt den Querschnitt längs der Linie A-A in Fig. 1. Der dargestellte Kabelkanal 1 hat U-förmigen Querschnitt mit der Basiswand 11 und den beiden Schenkeln 12, 13. An den freien Enden der Schenkel 12, 13 sind Rastvertiefungen 121, 131 und flanschartige Fahnen 122, 132 angeordnet, welche schenkelnah in den lichten Innenraum 14 des Kabelkanals 1 eingreifen. Das wannenartige Trageteil 4 ist in seiner Einbausituation gezeigt. Randnah besitzt das wannenartige Trageteil 4 Abstufungen 41, 42 und im Bereich der freien Enden Abwinkelungen 43, 44, welche die Rastnuten 121, 131 an den freien Enden der Schenkel 12, 13 überdecken. In den Abstufungen 41, 42 sind Öffnungen 411, 421 gleicher Größe angeordnet, wie in den flanschartigen Fahnen 122, 132. Dort haben die Öffnungen die Bezugszahlen 1221, 1321 erhalten. Durch die Öffnungen 411, 421, 1221, 1321 werden die Schnellbefestigungselemente 7, 8 durchgeführt und anschließend durch eine Drehung verspannt. Die Schnellbefestigungselemente 7, 8 besitzen in der gezeigten Darstellung einen zylindrischen Kopfteil 71, 81, einen zylindrischen Mittelteil 72, 82 sowie einen knebelartigen Fußteil 73, 83. Die Durchführungsöffnungen 411, 421, 1221, 1321 sind Langlöcher, durch die die knebelartigen Fußteile 73, 83 in axialer Stellung zur Achse des Kabelkanals durchgeführt werden.

Danach werden die Schnellbefestigungselemente durch eine Drehung um 90° festgezogen, wobei die knebelartigen Fußteile unter die flanschartigen Fahnen 122, 132 greifen und eine Verschiebung des wannenartigen Trageteils 4 in seinem Endsitz verhindern.

Das wannenartige Trageteil 4 trägt die Grundplatte 5, auf der das elektrische Einbauteil 3 vormontiert ist. Das elektrische Einbauteil 3 ist lediglich andeutungsweise dargestellt. Über dem wannenartigen Trageteil 4 mit der Grundplatte 5 und dem elektrischen Einbauteil 3 ist die Blende 6 montiert, über deren Eingriffsöffnungen 62 über einen in der Zeichnung nicht dargestellten Stecker sich die elektrische Verbindung zu dem betreffenden Steckdoseneinsatz (Einbauteil 3) herstellen läßt.

Die Montage der neuerungsgemäßen Geräteeinbaueinheit wird kurz wie folgt beschrieben:

Auf der Grundplatte 5 wird das elektrische Einbauteil beispielsweise über Schrauben festgelegt und komplett verdrahtet. Die Grundplatte 5 mit dem elektrischen Einbauteil wird danach auf dem wannenartigen Trageteil 4 festgelegt, was ebenfalls durch Anschrauben erfolgen kann. Rastbefestigungen sind hier genauso denkbar wie Klebebefestigungen. Vor der Befestigung werden in der Zeichnung nicht dargestellte Kabeldurchführungen im wannenartigen Trageteil geöffnet, durch welche die elektrischen Drähte des Einbauteils durchgeführt werden. Danach wird die Blende 6 im oberen Bereich des wannenartigen Trageteils festgelegt, wodurch das wannenartige Trageteil 4 mit dem elektrischen Einbauteil 3 zu einer geschlossenen Baueinheit wird.

Diese geschlossene Baueinheit wird an die Baustelle angeliefert. Dort werden die im lichten Innenraum 14 des Kabelkanals 1 verlaufenden Kabel mit den Drähten des elektrischen Einbauteils 3 leitend verbunden und danach das geschlossene Bauteil auf die Öffnung des Kabelkanals 1 derart aufgesteckt, daß die Ränder der Deckel 2 abdeckend übergriffen werden. Das Festlegen über die beiden Schnellverriegelungselemente 7, 8 erfolgt dann abschließend zur Verhinderung der seitlichen Verschiebbarkeit der Geräteeinbaueinheit.

## Patentansprüche

1. Kabelkanal (1) mit einem U-förmigen Unterteil und einem mit den freien Enden der U-Schenkel (12, 13) verbindbaren Deckel (2), wobei die freien Enden der U-Schenkel (12, 13) rechtwinkelig zum Kanalinneren hin abgewinkelt sind und in den abgewinkelten Bereichen (122, 132) Öffnungen (1221, 1321) zur Halterung sowohl des Deckels (2) als auch von elektrischen Einbauteilen (3) aufweisen, wobei der Deckel (2) nach oben durch eine Blende (6) abgedeckt ist und wobei der Deckel (2) als wannenartiges Trageteil (4) ausgebildet ist, das mit einem vormontierten elektrischen Einbauteil (3) versehen ist, dadurch gekennzeichnet, daß das wannenartige Trageteil (4) die Deckelränder übergreift und daß an den seitlichen Begrenzungen des Trageteils (4) randnahe Abstufungen (41, 42) ausgeformt sind, welche an den freien Längsrändern in Abwinkelungen (43, 44) auslaufen, die ihrerseits Rastnuten (121, 131) an den freien Enden der Schenkel (12, 13) des Kabelkanals (1) überdecken.

2. Kabelkanal nach Anspruch 1, dadurch gekennzeichnet, daß das wannenartige Trageteil (4) mit seinen seitlichen Rändern (43, 44) über den Rasteinrichtungen (121, 131) der freien Enden der U-Schenkel (12, 13) des Kabelkanals 1 rastend festgelegt ist.

3. Kabelkanal nach Anspruch 2, dadurch gekennzeichnet, daß das wannenartige Trageteil (4) zusätzlich mit Halteelementen (7, 8) an den flanschartigen Fahnen (122, 132) im Bereich der freien Enden der U-Schenkel (12, 13) des Kabelkanals (1) festgelegt ist.

## Claims

1. Cable trunking (1) with a U-shaped lower profile and a cover (2) which can be secured to the free ends of the U-profile sides (12, 13), whereby the free ends of the U-profile sides (12, 13) are flanged inwards at right angles towards the interior of the trunking and are provided with apertures (1221, 1321) in the flanged areas (122, 132) for the purpose of securing both the cover (2) and the internal electrical components (3); and whereby the cover (2) is covered at the top by a trim (6) and the cover (2) is configured as a trough-shaped supporting profile (4), which is provided with a preinstalled internal electrical component (3), thereby characterised, in that the trough- shaped supporting profile (4) overlaps the edges of the cover and in that shoulders (41, 42) are integrally moulded near the edges and at the lateral extremities of the supporting profile (4), which terminate in vertical side sections (43, 44); these, in turn, cover locking grooves (121, 131) at the open ends of the U-profile sides (12, 13) of the cable trunking (1).

2. Cable trunking according to claim 1, thereby characterised, in that the trough-shaped supporting profile (4) is secured by the locking of its vertical side sections (43, 44) over the locking devices (121, 131) of the free ends of the U-profile sides (12, 13) of the cable trunking (1).

3. Cable trunking according tc Claim 2, thereby characterised, in that the trough-shaped supporting profile (4) is also secured with retaining elements (7, 8) at the flange-type lugs (122, 132) in the area of the free ends of the U-profile sides (12, 13) of the cable trunking (1).

## Revendications

1. Goulotte (1) avec une partie inférieure en forme de U et un couvercle (2) pouvant être relié avec l'une des extrémités libres des ailes en U (12, 13), les extrémités libres des ailes en U (12, 13) étant pliés perpendiculairement par rapport à l'intérieur de la goulotte et présentant dans les zones pliées (122, 132) des ouvertures (1221, 1321) pour la fixation à la fois du couvercle (2) et d'éléments électriques (3), le couvercle (2) étant recouvert vers le haut par un obturateur (6) et conçu comme un élément porteur (4) en forme de cuvette muni d'un élément électrique prémonté (3), caractérisé par le fait que l'élément porteur en forme de cuvette (4) recouvre les bords du couvercle et que les extrémités latérales de l'élément porteur (4) comportent des paliers (41, 42) proches du bord qui finissent près des bords longitudinaux libres en pliures en U (43, 44) qui recouvrent elles-mêmes des rainures d'arrêt (121, 131) aux extrémités libres des ailes (12, 13) de la goulotte (1).

2. Goulotte selon la revendication 1, caractérisée par le fait que l'élément porteur en forme de cuvette est fixé par encliquetage avec ses bords latéraux (43, 44) par dessus les dispositifs d'encliquetage (121, 131) des extrémités libres des ailes en U (12, 13) de la goulotte 1.

3. Goulotte selon la revendication 2, caractérisée par le fait que l'élément porteur en forme de cuvette (4) est en outre maintenu par des éléments de fixation (7, 8) aux épaulements en forme de brides (122, 132) dans la zone des extrémités libres des ailes en U (12, 13) de la goulotte (1).
